# EUROPEAN PATENT SPECIFICATION

(11) **EP 4 357 197 B1**
(45) Date of publication and mention of the grant of the patent: **18.06.2025**
(21) Application number: 22201963.0
(22) Date of filing: 17.10.2022
(51) Int. Cl.: B60Q 1/26, B60Q 1/52, H01M 10/42, H01M 10/48, B60Q 5/00

(54) **VEHICLE WITH WARNING SYSTEM FOR AN ENERGY STORAGE SYSTEM AND METHOD FOR CONTROLLING THE WARNING SYSTEM**
KRAFTFAHRZEUG MIT WARNSYSTEM FÜR EIN ENERGIESPEICHERSYSTEM UND VERFAHREN ZUR STEUERUNG DES WARNSYSTEMS
VÉHICULE AVEC SYSTÈME D'AVERTISSEMENT POUR UN SYSTÈME DE STOCKAGE D'ÉNERGIE ET PROCÉDÉ DE COMMANDE DU SYSTÈME D'AVERTISSEMENT

(43) Date of publication of application: 24.04.2024
(73) Proprietor: VOLVO TRUCK CORPORATION, 405 08 Göteborg (SE)
(72) Inventor: SARKAR, Shantanu, 560034 BENGALURU (IN)
(74) Representative: Kransell & Wennborg KB

(56) References cited:
- EP-A1- 3 418 102
- CN-A- 110 782 633
- CN-A- 111 114 328
- CN-B- 106 627 218
- DE-A1- 102013 222 137
- DE-A1- 102020 209 266
- US-A1- 2014 055 252
- US-A1- 2021 237 578
- US-B2- 10 960 246

## Description

### TECHNICAL FIELD

The invention relates to a system and method for warning pedestrians in the vicinity of a vehicle for a potential battery explosion.

The invention can be applied in heavy-duty vehicles, such as trucks, buses and construction equipment. Although the invention will be described with respect to a truck, the invention is not restricted to this particular vehicle, but may also be used in any type of vehicle comprising a large battery.

### BACKGROUND

As more and more vehicles are equipped with large batteries for vehicle propulsion, the safety requirements are also increased. In heavy vehicles such as trucks and working machines, batteries or other types of energy storages may need to be placed on sides of the chassis so that there is sometimes a risk for pedestrians or other people in the vicinity of the vehicle if the battery would catch fire or explode.

CN106627218B describes an electric passenger bus battery fire early warning system, which can accurately predict the imminent fire before the fire occurs, thereby issuing a fire warning in time, so that the passenger has sufficient time for evacuation.

### SUMMARY

According to a first aspect of the invention, there is provided a vehicle comprising a warning system according to claim 1.

The present invention is aimed at warning pedestrians located in the vicinity of a vehicle if there is a risk that an energy storage system such as a battery may catch fire or explode. By means of the claimed warning system, the ground adjacent to the energy storage system can be illuminated to alert people in the vicinity of the vehicle that it is dangerous to occupy the area.

According to one embodiment of the invention, the energy storage control unit is configured to activate the illumination system when a hazardous condition is detected. The energy storage control unit which is responsible for detecting a hazardous condition is thereby also responsible for activating the warning system.

According to one embodiment of the invention, the energy storage control unit is configured to determine that a hazardous condition occur when an energy storage operating parameter from a predetermined group of operating parameters exceed a corresponding predetermined operating parameter threshold value. Thereby, suitable threshold values and operating parameters can be selected for a given application so that the warning system is not unnecessarily activated.

According to one embodiment of the invention, the energy storage control unit is configured to detect an increase in temperature of the energy storage, and if the increase in temperature is faster than a predetermined temperature ramp threshold value, determine that the energy storage system is in a hazardous condition. A rapid temperature increase can for example be indicative of thermal runaway in a battery.

According to one embodiment of the invention, the energy storage control unit is configured to detect a temperature of the energy storage, and if the temperature is higher than a predetermined temperature threshold value, determine that the energy storage system is in a hazardous condition. An elevated temperature of the energy storage can also be indicative of a fault in the system even if the temperature is not rapidly increasing. An increase in temperature can for example be indicative of a fault in a cooling system of the energy storage which in turn may lead to a hazardous condition.

According to one embodiment of the invention, the energy storage control unit is configured to detect a cooling capacity of the energy storage, and if the cooling capacity is lower than a predetermined cooling capacity threshold value, determine that the energy storage system is in a hazardous condition. Accordingly, a fault in the cooling system can also be indicative of a hazardous condition. Moreover, if a temperature sensor is faulty, it is possible that an increased temperature is not noted as a result of a faulty cooling system, in which case it is advantageous to directly observe the cooling capacity of the cooling system.

According to one embodiment of the invention, the energy storage control unit is configured to detect a pressure within the energy storage, and if the pressure is higher than a predetermined pressure threshold value, determine that the energy storage system is in a hazardous condition. An elevated pressure may occur both in batteries and in other types of energy storages and can be indicative of a hazardous condition.

According to one embodiment of the invention, the illumination system comprises a plurality of light sources, wherein the light sources are arranged to form one of a plurality of predetermined pattens of a ground area adjacent to the vehicle at one or more locations on the ground adjacent to corresponding one or more locations of one or more energy storages of the vehicle. The warning system can thereby adapt the pattern of illumination on the ground, for example based on the nature of the hazardous condition so that an appropriate warning zone can be provided for a given hazardous condition.

The illumination system comprises a plurality of light sources arranged at a bottom edge of the energy storage and/or the illumination system further comprises one or more light sources arranged horizontally along a length of the energy storage. It may be advantageous to arrange light sources at a bottom edge of an energy storage in order to have an unhindered light path to the ground. However, it should be noted that the light sources do not have to be arranged directly on the energy storage. The light sources may equally well be arranged on a frame surrounding the energy storage or on any other structural element of the vehicle in the vicinity of the energy storage so that a ground area adjacent to the energy storage can be illuminated. Horizontally arranged light sources can be advantageous to further alert a person of a hazardous condition in the vicinity of the energy storage.

According to a second aspect of the invention, there is provided a method according to claim 8.

According to one embodiment of the invention, detecting a hazardous condition comprises: monitoring a plurality of operating parameters of the energy storage; comparing the plurality of operating parameters with corresponding operating parameter threshold values; and when an operating parameter reaches a corresponding operating parameter threshold value, determine that the operating condition of the energy storage is a hazardous condition. Threshold values can for example be defined as allowable operating ranges of the operating parameter, and when the parameter value reaches either an upper or a lower threshold, it can be determined that the operating condition is a hazardous condition.

There is also provided a computer program product comprising program code for performing, when executed by a processor device, the aforementioned method, a control system comprising one or more control units configured to perform the method and a non-transitory computer-readable storage medium comprising instructions, which when executed by a processor device, cause the processor device to perform the method.

Effects and features of this second aspect of the present invention are largely analogous to those described above in connection with the first aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic illustration of an example implementation of the warning system;
Fig. 2 is a schematic illustration of an example implementation of the warning system; and
Fig. 3 is a flow chart of an example implementation of a method of controlling warning system.

### DETAILED DESCRIPTION OF EXAMPLE EMBODIMENTS OF THE INVENTION

In the present detailed description, various embodiments of the warning system and method for controlling the warning system according to the present inventive concept are mainly discussed with reference to an energy storage in the form of a battery. It should be noted that this by no means limits the scope of the present invention which is equally applicable to other types of energy storages, such as fuel cells, gas tanks and fuel cells where there is a risk of explosion or fire or other hazardous conditions.

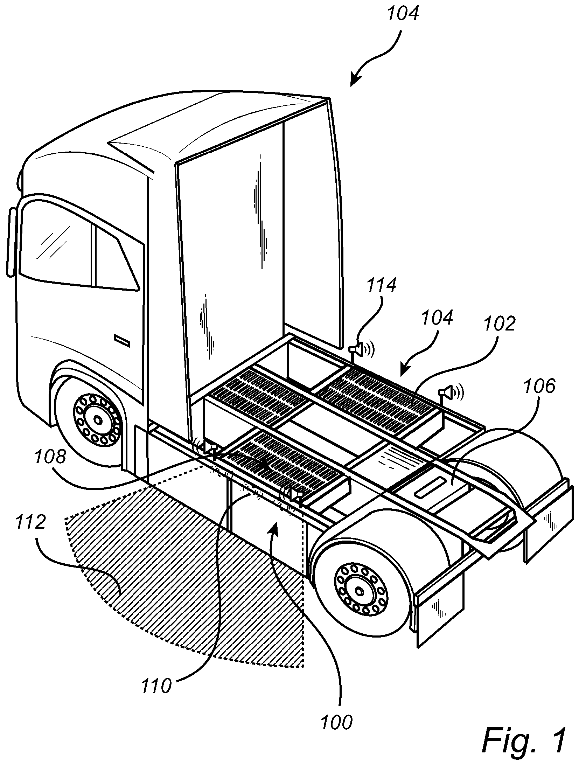

Fig. 1 schematically illustrates a warning system 100 for an energy storage system 102 of a vehicle 104. The illustrated energy storage system comprises a plurality of battery packs 102 arranged in or on the chassis of the vehicle 104. Here, the battery packs 102 are arranged so that sides of the battery packs 108 are exposed on an outside of the vehicle 104. The warning system comprises an energy storage control unit 106 configured to detect a hazardous condition of an energy storage 108 and an illumination system 110 configured to illuminate a ground area 112 adjacent to the vehicle at the location of the energy storage 108 for which a hazardous condition is detected.

The energy storage control unit 106 may include a microprocessor, microcontroller, programmable digital signal processor or another programmable device. The energy storage control unit 106 may also, or instead, include an application specific integrated circuit, a programmable gate array or programmable array logic, a programmable logic device, or a digital signal processor. Where the energy storage control unit 106 includes a programmable device such as the microprocessor, microcontroller or programmable digital signal processor mentioned above, the processor may further include computer executable code that controls operation of the programmable device.

The energy storage control unit 106 can also be part of a battery monitoring system (BMS) which is capable of monitoring energy storage parameters such as total voltage, voltages of individual cells, temperature, coolant intake temperature, coolant output temperature, temperatures of individual cells, coolant flow, current in or out of the battery, health of individual cells, pressure in the energy storage etc. Accordingly, energy storage control unit 106 makes use of a number of sensors existing in conventional energy storage systems such as temperature sensors, current and voltage sensors, flow sensors, resistance sensors, pressure sensors etc.

By monitoring one or more of the described parameters, energy storage control unit 106 can give an indication about possible thermal runaway scenarios which can be defined as hazardous conditions.

Possible scenarios where an operating condition can be described as a hazardous condition include if the cell temperature has crossed its maximum safe operating limit and if the cooling system is unable to bring the cell temperature down. The warning system may also include a time parameter so that if the temperature is above a temperature threshold value for more than a predetermined period of time, the warning system is activated. This provides a delay in the warning system so that the system is not activated for transient temperature spikes which can be handled by the cooling system. The time delay can be applied also for other of the described operating parameters to the same effect.

The energy storage control unit is further configured to detect a hazardous condition when an energy storage operating parameter from a predetermined group of operating parameters exceed a corresponding predetermined operating parameter threshold value, when the increase in temperature is faster than a predetermined temperature ramp threshold value, when the cooling capacity is lower than a predetermined cooling capacity threshold value, and when the pressure is higher than a predetermined pressure threshold value.

A large difference in cell voltage within a battery pack can also result in improper function of cell and hence can lead to thermal runaway. Thereby, cell voltage imbalance is another operating parameter which is monitored to detect a hazardous operating condition.

The warning system can also be activated if a collision is detected, particularly for a side collision impacting the energy storage, or if any other impact on the energy storage is detected. Accordingly, the warning system may include one or more acceleration sensors configured to detect an impact on the energy storage and thus detect a hazardous condition if an impact exceeding a threshold magnitude is detected.

Fig. 1 further illustrates the illumination system 110 configured to illuminate a ground area 112 adjacent to the vehicle at the location of the energy storage for which a hazardous condition is detected. The illumination system will make sure that a nearby person is informed and alerted before incidents occur in order to have time to move to safe distance. Accordingly, a hazardous condition is an operating condition which potentially could lead to an incident, and the warning system is configured to provide a warning in time before an incident occurs to prevent damage to passersby.

The illuminated ground area 112 is preferably clearly illuminated using red light since red wavelengths are scattered the least by air molecules. The effect of scattering is inversely related to the fourth power of the wavelength of a color. Since the color red has the highest wavelength of the visible colors it is scattered the least. Also, the universal danger color is red. However, it would also be possible to use other colors alone or in combination with red light sources. For example, during nighttime or in other situations when there is no ambient light, it may be more preferable to use blue light.

The illumination system can be configured so that the size and shape of the illuminated ground area is varied depending on the nature of the hazardous condition. Accordingly, the light sources are configurable to provide different illumination patterns on the ground adjacent to the vehicle.

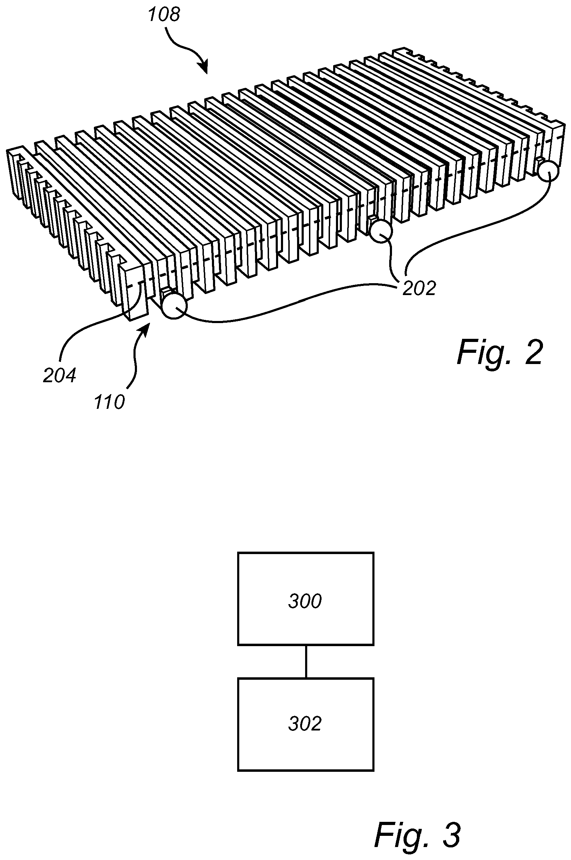

As illustrated in Fig. 1 and further highlighted in Fig. 2, the illumination system may comprise a plurality of individual light sources 202 which together can form one or more predetermined illumination patterns 112 on the ground adjacent to the vehicle. The plurality of light sources 202 may for example be arranged at a bottom edge of the energy storage to minimize the distance between the light source and the ground to be illuminated.

Moreover, the illumination system comprises one or more light sources 204 arranged horizontally along a length of the energy storage in the form of individual light sources or in the form of a light strip. The horizontally arranged light sources may span the length of the battery pack to indicate a potentially dangerous area. The horizontally arranged light sources can also be configured to flash in a repeating pattern to attract the attention of passersby.

Fig. 3 is a flow chart of an example implementation of a method of controlling the warning system 100. The method comprises detecting 300 a hazardous condition of an energy storage; and controlling 302 the illumination system to illuminate a ground area 112 adjacent to the vehicle at a location of the energy storage. The method is performed by energy storage control unit 106 in communication with various sensors of the energy storage system 102.

The described warning system can also be combined with audio signals using either the horn of the vehicle or dedicated sound sources such as speakers 114 in the vicinity of the energy storage to provide an alert of a potentially hazardous condition. Furthermore, the regular lights of the vehicle can also be used to further draw the attention of passersby, for example by flashing direction lights or headlights.

Even though the invention has been described with reference to specific exemplifying embodiments thereof, many different alterations, modifications and the like will become apparent for those skilled in the art. For example, the warning system is applicable for many types of energy storages.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality.

## Claims

1. A vehicle comprising a warning system (100) and an energy storage system (102) of a vehicle (104), the warning system comprising:
an energy storage control unit (106) configured to detect a hazardous condition of an energy storage (108); and
**characterized by** an illumination system (110) configured to illuminate a ground area (112) adjacent to the vehicle at the location of the energy storage for which a hazardous condition is detected, wherein the illumination system comprises a plurality of light sources (202) arranged at a bottom edge of the energy storage and/or one or more light sources (202, 204) arranged horizontally along a length of the energy storage.

2. The vehicle according to claim 1, wherein the energy storage control unit is configured to activate the illumination system when a hazardous condition is detected.

3. The vehicle according to claim 1 or 2, wherein the energy storage control unit is configured to determine that a hazardous condition occur when an energy storage operating parameter from a predetermined group of operating parameters exceed a corresponding predetermined operating parameter threshold value.

4. The vehicle according to any one of the preceding claims, wherein the energy storage control unit is configured to detect a temperature of the energy storage or an increase in temperature of the energy storage, and when the temperature is higher than a predetermined temperature threshold value or the increase in temperature is faster than a predetermined temperature ramp threshold value, determine that the energy storage system is in a hazardous condition.

5. The vehicle according to any one of the preceding claims, wherein the energy storage control unit is configured to detect a cooling capacity of the energy storage, and when the cooling capacity is lower than a predetermined cooling capacity threshold value, determine that the energy storage system is in a hazardous condition.

6. The vehicle according to any one of the preceding claims, wherein the energy storage control unit is configured to detect a pressure within the energy storage, and when the pressure is higher than a predetermined pressure threshold value, determine that the energy storage system is in a hazardous condition.

7. The vehicle according to any one of the preceding claims, wherein the illumination system comprises a plurality of light sources (202, 204), wherein the light sources are arranged to form one of a plurality of predetermined pattens of a ground area adjacent to the vehicle at one or more locations on the ground adjacent to corresponding one or more locations of one or more energy storages of the vehicle.

8. Method of controlling a warning system (100) of an energy storage system (102) of a vehicle (104), the warning system comprising: an energy storage control unit (106) and an illumination system (110) configured to illuminate a ground area (112) adjacent to the vehicle at the location of the energy storage, **characterized in that** the illumination system comprises a plurality of light sources (202) arranged at a bottom edge of the energy storage and/or one or more light sources (202, 204) arranged horizontally along a length of the energy storage, wherein the method comprises:
detecting (300) a hazardous condition of an energy storage (108); and
controlling (302) the illumination system to illuminate a ground area adjacent to the vehicle at a location of the energy storage.

9. The method according to claim 8, wherein detecting a hazardous condition comprises:
monitoring a plurality of operating parameters of the energy storage;
comparing the plurality of operating parameters with corresponding operating parameter threshold values; and
when an operating parameter reaches a corresponding operating parameter threshold value, determining that the operating condition of the energy storage is a hazardous condition.

10. A computer program product comprising program code for performing, when executed by a processor device, the method of any of claims 8 to 9.

11. A control system comprising one or more control units configured to perform the method according to any of claims 8 to 9.

12. A non-transitory computer-readable storage medium comprising instructions, which when executed by a processor device, cause the processor device to perform the method of any of claims 8 to 9.

## Patentansprüche

1. Fahrzeug (104) mit einem Warnsystem (100) und einem Energiespeichersystem (102), das Warnsystem umfassend:
eine Energiespeicher-Steuereinheit (106), die konfiguriert ist, um einen gefährlichen Zustand eines Energiespeichers (108) zu erfassen; und
**gekennzeichnet durch** ein Beleuchtungssystem (110), das konfiguriert ist, um einen an das Fahrzeug angrenzenden Bodenbereich (112) an der Stelle des Energiespeichers zu beleuchten, für die ein gefährlicher Zustand erfasst wird, wobei das Beleuchtungssystem mehrere Lichtquellen (202) umfasst, die an einer Unterkante des Energiespeichers angeordnet sind, und/oder eine oder mehrere Lichtquellen (202, 204), die horizontal entlang einer Länge des Energiespeichers angeordnet sind.

2. Fahrzeug nach Anspruch 1, wobei die Energiespeicher-Steuereinheit konfiguriert ist, um das Beleuchtungssystem zu aktivieren, wenn ein gefährlicher Zustand erfasst wird.

3. Fahrzeug nach Anspruch 1 oder 2, wobei die Energiespeicher-Steuereinheit konfiguriert ist, um zu bestimmen, dass ein gefährlicher Zustand eintritt, wenn ein Betriebsparameter des Energiespeichers aus einer vorbestimmten Gruppe von Betriebsparametern einen entsprechenden vorbestimmten Betriebsparameter-Schwellenwert überschreitet.

4. Fahrzeug nach einem der vorhergehenden Ansprüche, wobei die Energiespeicher-Steuereinheit konfiguriert ist, um eine Temperatur des Energiespeichers oder einen Temperaturanstieg des Energiespeichers zu erfassen und, und wenn die Temperatur höher als ein vorbestimmter Temperaturschwellenwert ist oder der Temperaturanstieg schneller als ein vorbestimmter Temperaturrampen-Schwellenwert ist, bestimmen, dass sich das Energiespeichersystem in einem gefährlichen Zustand befindet.

5. Fahrzeug nach einem der vorhergehenden Ansprüche, wobei die Energiespeicher-Steuereinheit konfiguriert ist, um eine Kühlkapazität des Energiespeichers zu erfassen und, wenn die Kühlkapazität unter einem vorbestimmten Kühlkapazität-Schwellenwert liegt, bestimmen, dass sich das Energiespeichersystem in einem gefährlichen Zustand befindet.

6. Fahrzeug nach einem der vorhergehenden Ansprüche, wobei die Energiespeicher-Steuereinheit konfiguriert ist, um einen Druck innerhalb des Energiespeichers zu erfassen und, wenn der Druck höher als ein vorbestimmter Druckschwellenwert ist, bestimmen, dass sich das Energiespeichersystem in einem gefährlichen Zustand befindet.

7. Fahrzeug nach einem der vorhergehenden Ansprüche, wobei das Beleuchtungssystem mehrere Lichtquellen (202, 204) umfasst, wobei die Lichtquellen angeordnet sind, um eines von mehreren vorbestimmten Mustern eines an das Fahrzeug angrenzenden Bodenbereichs an einer oder mehreren Stellen auf dem Boden zu bilden, die an eine oder mehrere entsprechende Stellen eines oder mehrerer Energiespeicher des Fahrzeugs angrenzen.

8. Verfahren zur Steuerung eines Warnsystems (100) eines Energiespeichersystems (102) eines Fahrzeugs (104), das Warnsystem umfassend: eine Energiespeicher-Steuereinheit (106) und ein Beleuchtungssystem (110), das konfiguriert ist, um einen Bodenbereich (112) angrenzend an das Fahrzeug an der Stelle des Energiespeichers zu beleuchten, **dadurch gekennzeichnet, dass** das Beleuchtungssystem mehrere Lichtquellen (202) umfasst, die an einer Unterkante des Energiespeichers angeordnet sind, und/oder eine oder mehrere Lichtquellen (202, 204), die horizontal entlang einer Länge des Energiespeichers angeordnet sind, wobei das Verfahren umfasst:
Erfassen (300) eines gefährlichen Zustands eines Energiespeichers (108); und
Steuern (302) des Beleuchtungssystems, um einen an das Fahrzeug angrenzenden Bodenbereich an einer Stelle des Energiespeichers zu beleuchten.

9. Verfahren nach Anspruch 8, wobei das Erfassen eines gefährlichen Zustands umfasst:
Überwachen mehrerer Betriebsparameter des Energiespeichers;
Vergleichen der mehreren Betriebsparameter mit den entsprechenden Betriebsparameter-Schwellenwerten; und
wenn ein Betriebsparameter einen entsprechenden Betriebsparameter-Schwellenwert erreicht, bestimmen, dass der Betriebszustand des Energiespeichers ein gefährlicher Zustand ist.

10. Computerprogrammprodukt mit Programmcodemitteln zum Durchführen des Verfahrens nach einem der Ansprüche 8 bis 9, wenn es von einer Prozessorvorrichtung ausgeführt wird.

11. Steuerungssystem mit einer oder mehreren Steuereinheiten, die zur Durchführung des Verfahrens nach einem der Ansprüche 8 bis 9 konfiguriert sind.

12. Nicht-transitorisches computerlesbares Speichermedium, das Anweisungen enthält, die, wenn sie von einer Prozessorvorrichtung ausgeführt werden, die Prozessorvorrichtung veranlassen, das Verfahren nach einem der Ansprüche 8 bis 9 durchzuführen.

## Revendications

1. Véhicule comprenant un système d'avertissement (100) et un accumulateur d'énergie (102) d'un véhicule (104), le système d'avertissement comprenant :
une unité de commande de stockage d'énergie (106) configurée pour détecter un état dangereux d'un accumulateur d'énergie (108) ; et
**caractérisé par** un système d'éclairage (110) configuré pour éclairer une zone de sol (112) adjacente au véhicule à l'emplacement de l'accumulateur d'énergie pour lequel un état dangereux est détecté, le système d'éclairage comprenant une pluralité de sources lumineuses (202) disposées au niveau d'un bord inférieur de l'accumulateur d'énergie et/ou une ou plusieurs sources lumineuses (202, 204) disposées horizontalement le long d'une longueur de l'accumulateur d'énergie.

2. Système d'avertissement de véhicule selon la revendication 1, dans lequel l'unité de commande de l'accumulateur d'énergie est configurée pour activer le système d'éclairage lorsqu'un état dangereux est détecté.

3. Système d'avertissement de véhicule selon la revendication 1 ou 2, dans lequel l'unité de commande de stockage d'énergie est configurée pour déterminer qu'un état dangereux survient lorsqu'un paramètre de fonctionnement de l'accumulateur d'énergie appartenant à un groupe prédéterminé de paramètres de fonctionnement dépasse une valeur seuil de paramètre de fonctionnement correspondante prédéterminée.

4. Système d'avertissement de véhicule selon l'une quelconque des revendications précédentes, dans lequel l'unité de commande de stockage d'énergie est configurée pour détecter une température de l'accumulateur d'énergie ou une augmentation de température de l'accumulateur d'énergie et, lorsque la température est supérieure à une valeur seuil de température prédéterminée ou que l'augmentation de température est plus rapide qu'une valeur seuil de rampe de température prédéterminée, pour déterminer que l'accumulateur d'énergie est dans un état dangereux.

5. Système d'avertissement de véhicule selon l'une quelconque des revendications précédentes, dans lequel l'unité de commande de stockage d'énergie est configurée pour détecter une capacité de refroidissement de l'accumulateur d'énergie et, lorsque la capacité de refroidissement est inférieure à une valeur seuil de capacité de refroidissement prédéterminée, pour déterminer que l'accumulateur d'énergie se trouve dans un état dangereux.

6. Système d'avertissement de véhicule selon l'une quelconque des revendications précédentes, dans lequel l'unité de commande de stockage d'énergie est configurée pour détecter une pression à l'intérieur de l'accumulateur d'énergie et, lorsque la pression est supérieure à une valeur seuil de pression prédéterminée, pour déterminer que l'accumulateur d'énergie est dans un état dangereux.

7. Système d'avertissement de véhicule selon l'une quelconque des revendications précédentes, dans lequel le système d'éclairage comprend une pluralité de sources lumineuses (202, 204), les sources lumineuses étant disposées de manière à former l'un d'une pluralité de motifs prédéterminés d'une zone de sol adjacente au véhicule à un ou plusieurs emplacements sur le sol adjacents à un ou plusieurs emplacements correspondants d'un ou plusieurs accumulateurs d'énergie du véhicule.

8. Procédé de commande d'un système d'avertissement (100) pour un accumulateur d'énergie (102) d'un véhicule (104), le système d'avertissement comprenant :
une unité de commande de stockage d'énergie (106) et un système d'éclairage (110) configuré pour éclairer une zone au sol (112) adjacente au véhicule à l'emplacement de l'accumulateur d'énergie, **caractérisé en ce que** le système d'éclairage comprend une pluralité de sources lumineuses (202) disposées au niveau d'un bord inférieur de l'accumulateur d'énergie et/ou une ou plusieurs sources lumineuses (202, 204) disposées horizontalement le long d'une longueur de l'accumulateur d'énergie, le procédé comprenant :
la détection (300) d'un état dangereux d'un accumulateur d'énergie (108) ; et
la commande (302) du système d'éclairage pour éclairer une zone de sol adjacente au véhicule à un emplacement de l'accumulateur d'énergie.

9. Procédé selon la revendication 8, dans lequel la détection d'un état dangereux comprend :
la surveillance d'une pluralité de paramètres de fonctionnement de l'accumulateur d'énergie ;
la comparaison de la pluralité de paramètres de fonctionnement avec des valeurs seuils de paramètres de fonctionnement correspondantes ; et,
lorsqu'un paramètre de fonctionnement atteint une valeur seuil de paramètre de fonctionnement correspondante, la détermination que l'état de fonctionnement de l'accumulateur d'énergie est un état dangereux.

10. Produit de programmation informatique comprenant un code de programme pour exécuter, lorsqu'il est exécuté par un dispositif de processeur, le procédé selon l'une quelconque des revendications 8 à 9.

11. Système de commande comprenant une ou plusieurs unités de commande configurées pour exécuter le procédé selon l'une quelconque des revendications 8 à 9.

12. Support de stockage non transitoire lisible par ordinateur comprenant des instructions qui, lorsqu'elles sont exécutées par un dispositif processeur, amènent le dispositif processeur à exécuter le procédé selon l'une quelconque des revendications 8 à 9.
